# EUROPÄISCHE PATENTSCHRIFT

(11) **EP 2 489 288 B1**
(45) Veröffentlichungstag und Bekanntmachung des Hinweises auf die Patenterteilung: **07.08.2013**
(21) Anmeldenummer: 12000709.1
(22) Anmeldetag: 03.02.2012
(51) Int. Cl.: F16F 1/02, A47C 23/00, A47C 23/06, A47C 7/34, A47C 23/04

(54) **Flächenfederelement**
Surface spring element
ressort pour une surface

(30) Priorität: 18.02.2011 DE 202011002925 U
(43) Veröffentlichungstag der Anmeldung: 22.08.2012
(73) Patentinhaber: Hartmann, Siegbert, 32584 Löhne (DE)
(72) Erfinder: Hartmann, Siegbert, 32584 Löhne (DE)
(74) Vertreter: Rolf, Gudrun

(56) Entgegenhaltungen:
- DE-U1- 20 202 050
- US-A- 5 927 696
- US-B1- 6 170 808

## Beschreibung

Die Erfindung betrifft ein Flächenfederelement gemäß dem Oberbegriff des Hauptanspruches.

Es ist ein Einzelfederelement bekannt, DE 203 18 336 U1, welches für eine Unterfederung eines Sitz- oder Liegemöbels, insbesondere für Auflagen wie Matratzen verwandt wird und vollständig aus Kunststoff gefertigt ist, welches ein Fußteil zur Befestigung auf eine Unterlage, etwa einem starren Querholm oder einer ebenen Fläche mit sich in entgegengesetzten Richtungen seitlich nach oben erstreckenden Federarmen und daran angeformten Auflagerflächen aufweist.

Ein solches Einzelfederelement ist aus mehreren Einzelteilen zusammengesetzt und erzeugt bei einer vertikalen Belastung Relativbewegungen zwischen einer Auflage und den Auflagerflächen, was zu Verschleißerscheinungen der Auflage führen kann, da auch die wirksame Auflagerfläche des bekannten Einzelfederelementes im Verhältnis zur unterstützten Auflage als eher gering anzusehen ist.

Bekannt ist auch ein separater Stützkörper eines ebenfalls mehrteiligen Einzelfederelements, DE 202 02 050 U1, mit Ausnehmungen in oberen Platten von Federstreben zur Anordnung einer starren Auflagerplatte, die allerdings keinen Einfluss auf die Federeigenschaften des Stützkörpers ausübt.

Aufgabe der Erfindung ist es, ein Flächenfederelement mit einer vergrößerten Auflagerfläche zur Verfügung zu stellen, welches wirtschaftlich zu fertigen ist und Relativbewegungen zwischen Flächenfederelement und Auflage deutlich reduziert. Des Weiteren sollen die Federeigenschaften des Flächenfederelementes optimiert sein, ebenso wie seine Federkernlinie.

Die Lösung dieser Aufgabe ergibt sich in Verbindung mit den Merkmalen des Oberbegriffs des ersten Schutzanspruches erfindungsgemäß aus und im Zusammenhang mit den technischen Merkmalen seines kennzeichnenden Teils.

Dadurch, dass das Flächenfederelement mindestens eine mittlere Auflagerfläche mit zwei sich gegenüberliegenden und seitlich nach unten erstreckenden Seitenflächen mit unteren Rändern aufweist, an denen Stützflügel angeformt sind, die sich in seitlicher Richtung zurück nach außen und oben schwingen und dort in seitliche Auflagerflächen übergehen, die mit den Auflagerflächen der Stützarme verbunden sind, wird erreicht, dass bei einer Vertikalbelastung der mittleren Auflagerfläche nach unten interaktiv eine nach oben gerichtete Gegenkraft in den seitlichen Auflagerflächen erzeugt wird, so dass als wesentlicher Vorteil ein neuer kinematischer Zusammenhang geschaffen ist, bei dem bei einer freien Verformung der ersten Auflagerfläche des Flächenfederelementes nach unten die beiden Seitenflügel um virtuelle Schwenkachsen herum nach oben angehoben werden, wobei diese virtuelle Schwenkachsen parallel zu den Seitenflächen der mittleren Auflagerfläche etwa im Bereich der oberen Enden der Stützarme des Fußteils durch das Flächenfederelement hindurch verlaufen.

Eine solche erfindungsgemäße Ausgestaltung führt zur großflächigen Unterfederung einer Auflage, bei der eine Relativbewegung zwischen den Auflagerflächen und einer Auflage fast gänzlich ausgeschlossen ist, wobei aber im Flächenfederelement eine gleichmäßige Materialbeanspruchung erzeugt wird, was sich vorteilhaft auf dessen Lebensdauer auswirkt. Bei einer auf dem Flächenfederelement aufliegenden Matzratze wird sich bei dessen Belastung zunächst diese genannte Spannung im Bauteil aufbauen und sich die Auflagerflächen anschließend gemeinsam in der Belastungsrichtung verformen.

Vorteilhafte Ausgestaltungen des erfinderischen Flächenfederelementes ergeben sich mit und in Kombination aus den nachfolgenden Unteransprüchen.

Entsprechend einer besonders bevorzugten Ausführungsform des Gegenstandes des erfinderischen Flächenfederelementes ist dieses einteilig als ein- oder mehrkomponentiges Spritzgussteil hergestellt. Hierdurch wird seine Verwendung erheblich wirtschaftlicher und der Einbau deutlich vereinfacht, da weder für den Zusammenbau noch für den Einbau spezielle Werkzeuge erforderlich sind, so dass auch bei der Montage keine Fehler auftreten können. Ebenso wird einer ungewünschten Geräuschentwicklung durch gegenseitige Bewegung beteiligter Bauteile wirksam entgegengewirkt.

Besonders vorteilhaft ist des Weiteren eine Ausgestaltung der Erfindung, bei der mindestens ein Teilbereich der mittleren Auflagerfläche des Flächenfederelementes als permanente Lagerfläche für eine Auflage ausgebildet ist, die sich zumindest im unbelasteten Zustand in einer horizontalen Richtung über die seitlichen Auflagerflächen erhebt, wodurch zum einen eine Matratzenlüftungsfunktion zur Verfügung gestellt wird, zum anderen eine progressive Federkernlinie verwirklicht werden kann, mit einer zunächst relativ weichen Federrate der mittleren Auflagerfläche und anschließend, nach deren Absinken und dem dadurch erzeugten Anlegen der Seitenflügel unter die Auflage, mit einer sich verhärtenden Federrate bei sich vergrößernder Gesamtauflagerfläche.

Zur Gewährleistung dieser interaktiven Wirkungsweise des erfindungsgemäßen Flächenfederelementes sind die Seitenflächen der mittleren Auflagerfläche und die Stützflügel mit gegenseitigen Versteifungen in Form von Versteifungsrippen ausgestattet. Vorzugsweise ist die mittlere Auflagerfläche dabei leicht ballig nach oben ausgebildet und mit Lüftungsausnehmungen versehen, ebenso wie die Auflagerflächen der Stützarme und der Stützflügel mit solchen Lüftungsausnehmungen versehen sein können, die zum anderen der Materialeinsparung dienen können aber auch der Anordnung von Versteifungsrippen im Bereich ihrer Ränder, wodurch sich die Stabilität des Bauteiles weiter vergrößert bzw. die erforderlichen Wandstärken und damit der erforderliche Materialeisatz verringert werden können.

Die Flächenfederelemente können wahlfrei mit einem, zwei oder mehreren Fußteilen ausgestattet sein, ebenso wie sie in einer Draufsicht von oben eine schmale, eine quadratische oder eine längliche rechteckige, mehreckige oder auch eine runde oder ovale Grundfläche aufweisen können. Die Flächenfederelemente können des Weiteren auf einer Unterlage, wie etwa einem quasi starren Querholm oder auch einer ebenen Fläche, wahlfrei in einer Längs- oder Querrichtung verteilt angeordnet werden, um die gewünschten Feder- und Unterstützungsfunktionen erzeugen zu können.

Von besonderem Vorteil ist des Weiteren die Ausgestaltung des Fußteiles mit einem Verriegelungszapfen mit Verriegelungsnocken, dessen Verriegelungszapfen sich nach unten erstreckend an einer elastischen Lasche angeordnet ist und im verbauten Zustand des Flächenfederelementes in einer bohrungsförmigen Aufnahme einer Unterlage entgegen seiner Einsteckrichtung dauerhaft vorgespannt gelagert ist, in der ihn der Verrieglungsnocken nach dem Einbau und einer leichten elastischen Verformung der Lasche halten, wodurch ebenfalls wirkungsvoll sichergestellt wird, dass das Flächenfederelement nicht nur formschlüssig, sondern auch dauerhaft kraftschlüssig auf seiner Unterlage gehalten werden kann, wodurch sich über die Lebensdauer des Flächenfederelements eine Geräuschfreiheit sicher erzielen lässt.

Nachfolgend ist ein Ausführungsbeispiel der Erfindung anhand von Zeichnungen näher beschrieben. Es zeigen:
- Fig. 1: eine räumliche Ansicht des Flächenfederelementes von schräg oben,
- Fig. 2: eine Seitenansicht des Flächenfederelementes gemäß Fig. 1 mit einer einskizzierten Verformung,

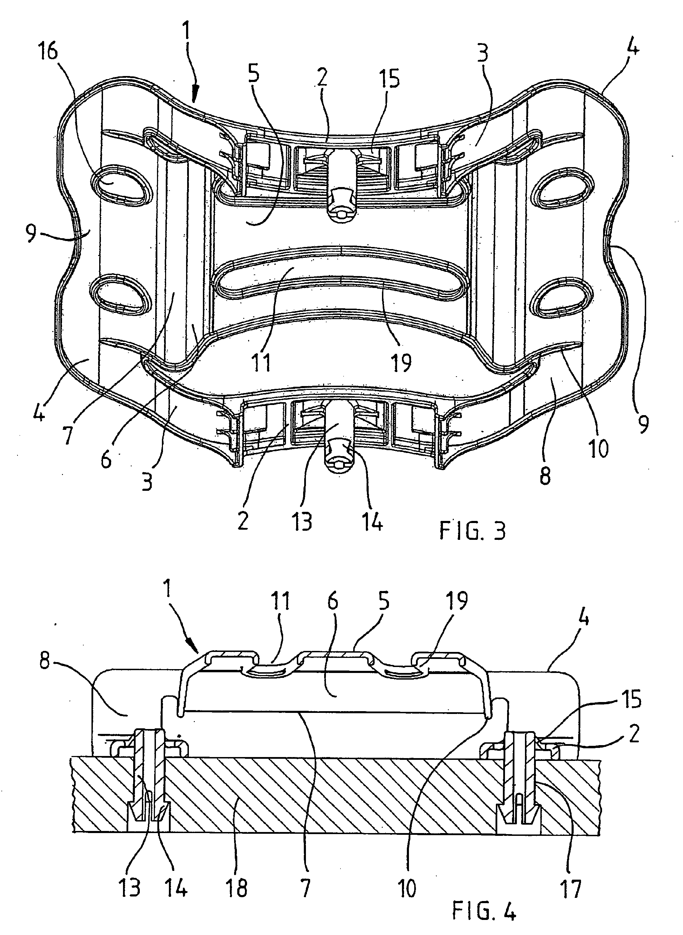

- Fig. 3: eine räumliche Unteransicht des Flächenfederelementes gemäß Fig. 1,
- Fig. 4: eine geschnittene Seitenansicht eines auf einen Querholm montierten Flächenfederelementes,

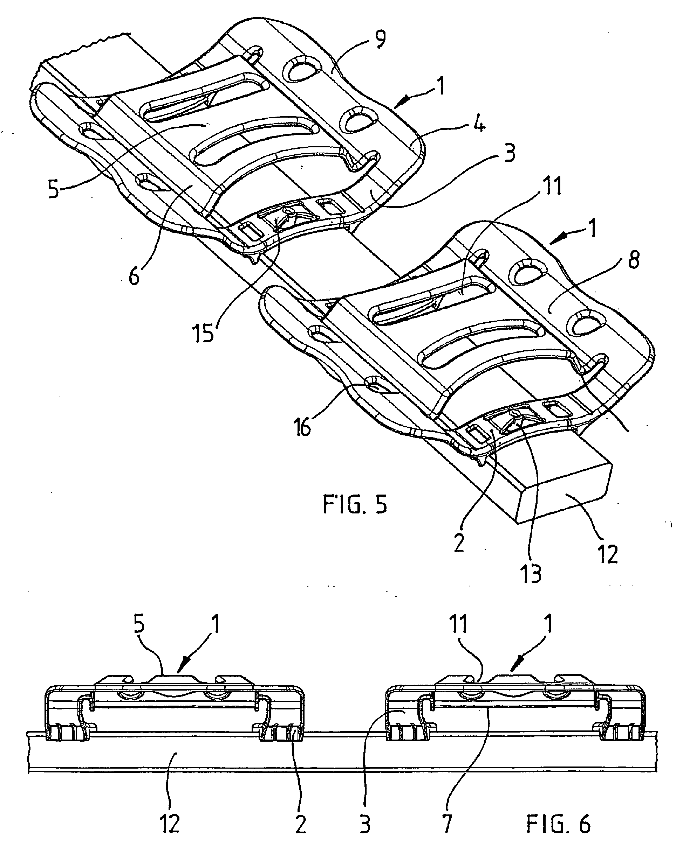

- Fig. 5: eine räumliche Ansicht zweier auf einen Querholm montierten Flächenfeder-elementes gemäß Fig. 1, und
- Fig. 6: eine Seitenansicht der Flächenfederelemente gemäß Fig. 5 in verkleinerter Darstellung.

Das Flächenfederelement 1 ist in einer Draufsicht von oben etwa quadratisch ausgebildet und weist an zwei sich gegenüberliegenden Seiten Fußteile 2 auf, mit denen es sich auf einer Unterlage fixieren lässt. Von den Fußteilen 2 erstrecken sich jeweils beidseitig nach oben geschwungene Stützarme 3, die in ihren oberen Bereichen in Auflagerflächen 4 übergehen, die in horizontale Fläche auslaufen.

Die mittlere Auflagerfläche 5 des Flächenfederelementes 1 ist leicht ballig nach oben ausgebildet und weist Lüftungsausnehmungen 11 auf, deren nach unten gerichteten Ränder mit Versteifungsstegen 19 umsäumt sind, ebenso wie die Lüftungsausnehmungen 16 in den seitlichen Auflagerflächen 9 des Flächenfederelementes 1.

Die mittlere Auflagerfläche 5 weist in einer Längsrichtung des Flächenfederelementes 1 nach unten gerichtete Seitenflächen 6 auf, an deren unteren Rändern 7 Stützflügel 8 angeformt sind, die sich geschwungen seitlich nach oben und außen erstrecken und in horizontalen seitlichen Auflagerflächen 9 auslaufen und mit den Auflagerflächen 4 der Stützarme 3 gemeinsame Auflagerflächen bilden, die im unbelasteten Zustand des Flächenfederelementes 1 gegenüber dessen mittlerer Auflagerfläche 5 abgesenkt sind.

Die Seitenflächen 6 der mittleren Auflagerfläche 5 und die Stützflügel 8 sind mit Versteifungen 10 in Form von Versteifungsrippen ausgestattet, so dass sich bei einer vertikalen Belastung der mittleren Auflagerfläche 5 Schwenkbewegungen der Stützflügel 8 nach oben einstellen, wobei diese Schwenkbewegungen um virtuelle Schwenkachsen S im Bereich der Enden der Stützarme 3 der Fußteile 2 erfolgen.

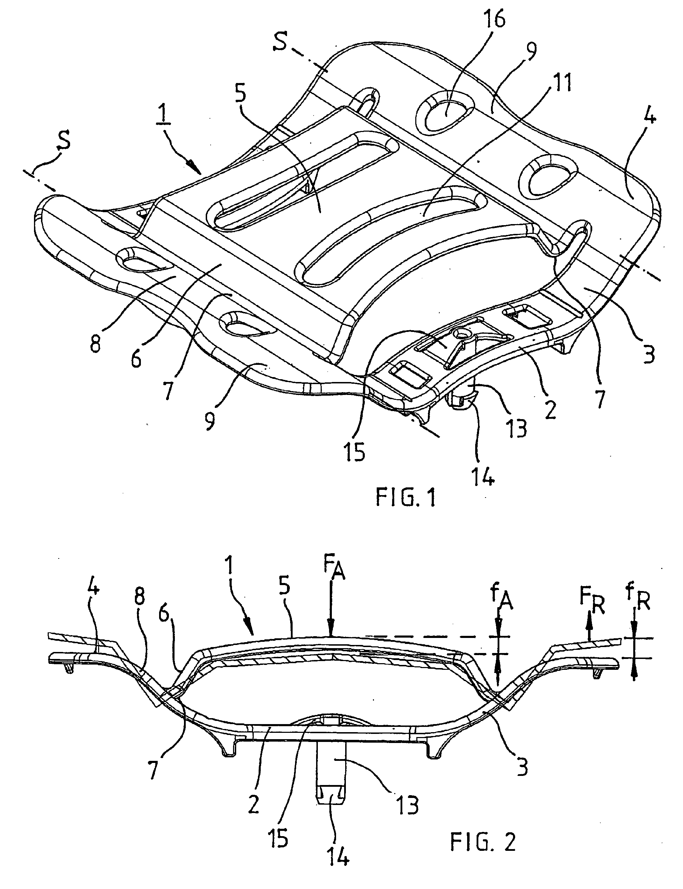

Wie in Fig. 2 dargestellt, ruft eine vertikal nach unten gerichtete Belastungskraft F_{A} in den Stützflügeln 8 eines freien Flächenfederelementes 1 beidseitige aufwärts gerichtete Reaktionskräfte F_{R} hervor bzw. erzeugt eine durch die Belastungskraft F_{A} hervorgerufene Verformung der mittleren Auflagerfläche 5 um den Weg Δ f_{A} nach unten eine Verformung der beiden Stützflügel 8 um den Weg Δ f_{R} nach oben.

Das Fußteil 2 weist eine elastische Lasche 15 auf, an der ein sich nach unten erstreckender Verriegelungszapfen 13 mit Verriegelungsnocken 14 angeordnet ist, wobei der Verriegelungszapfen 13 nach einer Montage des Flächenfederelementes 1 in Bohrungen 17 einer Unterlage 18 über die elastische Lasche 15 entgegen seiner Einsteckrichtung von den Verriegelungsnocken 14 vorgespannt gehalten wird.

Das Flächenfederelement 1 ist einteilig als Kunststoffspritzgussteil ausgeführt, wobei diese Ausführung in ein- oder mehrkomponentiger Art und Weise ausgeführt sein kann.

## Patentansprüche

1. Flächenfederelement einer Unterfederung eines Sitz- oder Liegemöbels aus Kunststoff, mit einem Fußteil (2) zur Befestigung auf einer Unterlage mit in entgegengesetzten Richtungen seitlich nach oben geschwungenen Stützarmen (3) und daran angeformten Auflagerflächen (4;5;9), **dadurch gekennzeichnet, dass** das Flächenfederelement (1) mindestens eine mittlere Auflagerfläche (5) mit zwei sich gegenüberliegenden und seitlich nach unten erstreckenden Seitenflächen (6) mit unteren Rändern (7) aufweist, an denen Stützflügel (8) angeformt sind, die sich in seitlicher Richtung zurück nach oben und außen schwingen und dort in seitliche Auflagerflächen (9) übergehen, die mit den Auflagerflächen (4) der Stützarme (3) verbunden sind und dass eine vertikale Belastung der mittleren Auflagerfläche (5) nach unten interaktiv eine nach oben gerichtete Gegenkraft in den seitlichen Auflagerflächen (4;9) erzeugt und bei einer freien Verformung die beiden Stützflügel (8) nach oben angehoben sind.

2. Flächenfederelement nach Anspruch 1, **dadurch gekennzeichnet, dass** es einteilig als ein- oder mehrkomponentiges Spritzgussteil hergestellt ist.

3. Flächenfederelement nach einem der vorgenannten Ansprüche, **dadurch gekennzeichnet, dass** mindestens ein Teilbereich der mittleren Auflagerfläche (5) als permanente Lagerfläche für eine Auflage ausgebildet ist und sich zumindest im unbelasteten Zustand in horizontaler Richtung über die seitlichen Auflagerflächen (4;9) erhebt.

4. Flächenfederelement nach einem der vorgenannten Ansprüche, **dadurch gekennzeichnet, dass** die Seitenflächen (6) der mittleren Auflagerfläche (5) und die Stützflügel (8) mit gegenseitigen Versteifungen (10) ausgestattet sind.

5. Flächenfederelement nach einem der vorgenannten Ansprüche, **dadurch gekennzeichnet, dass** die mittlere Auflagerfläche (5) leicht ballig nach oben ausgebildet ist und mit Lüftungsausnehmungen (11) versehen ist.

6. Flächenfederelement nach einem der vorgenannten Ansprüche, **dadurch gekennzeichnet, dass** es ein, zwei oder mehrere Fußteile (2) aufweist und in einer Draufsicht von oben eine schmale, quadratische oder längliche rechteckige oder eine runde oder ovale Grundfläche aufweist.

7. Flächenfederelement nach einem der vorgenannten Ansprüche, **dadurch gekennzeichnet, dass** es zu mehreren in einer Längs- und/ oder Querrichtung verteilt auf einer Unterlage wie einen quasi starren Querholm (12) oder einer ebenen Fläche angeordnet ist.

8. Flächenfederelement nach einem der vorgenannten Ansprüche, **dadurch gekennzeichnet, dass** sein Fußteil (2) einen Verrieglungszapfen (13) mit Verriegelungsnocken (14) aufweist, der an einer elastischen Lasche (15) angeordnet ist und der Verriegelungszapfen (13) im verbauten Zustand des Flächenfederelements (1) in einer Aufnahme einer Unterlage entgegen seiner Einsteckrichtung dauerhaft vorgespannt gehalten ist.

## Claims

1. Surface-area spring element which is made of plastics material and belongs to an underspringing arrangement of furniture for sitting or lying on, having a foot part (2) for fastening on an underlying surface, with supporting arms (3), curved laterally upwards in opposite directions, and support surfaces (4; 5; 9) formed thereon, **characterized in that** the surface-area spring element (1) has at least one central support surface (5) with two mutually opposite and laterally downwardly extending side surfaces (6), with lower peripheries (7), on which are integrally formed supporting wings (8) which curve back upwards and outwards in the lateral direction and merge there into lateral support surfaces (9) which are connected to the support surfaces (4) of the supporting arms (3), and **in that** vertical loading of the central support surface (5) in the downward direction interactively generates an upwardly directed opposing force in the lateral support surfaces (4; 9) and, in the case of free deformation, the two supporting wings (8) are raised upwards.

2. Surface-area spring element according to Claim 1, **characterized in that** it is produced in one piece as an injection moulding having one or more components.

3. Surface-area spring element according to one of the preceding claims, **characterized in that** at least one sub-region of the central support surface (5) is designed as a permanent bearing surface for a support and, at least in the non-loaded state, rises up horizontally over the lateral support surfaces (4; 9).

4. Surface-area spring element according to one of the preceding claims, **characterized in that** the side surfaces (6) of the central support surface (5) and also the supporting wings (8) are provided with mutual reinforcements (10).

5. Surface-area spring element according to one of the preceding claims, **characterized in that** the central support surface (5) is formed to be slightly convex in the upward direction and is provided with ventilation holes (11).

6. Surface-area spring element according to one of the preceding claims, **characterized in that** it has one, two or more foot parts (2) and, as seen in plan view, has a narrow, square or elongate rectangular, or a round or oval, basic surface area.

7. Surface-area spring element according to one of the preceding claims, **characterized in that** a plurality are distributed in a longitudinal direction and/or transverse direction on an underlying surface such as a more or less rigid crossmember (12) or a planar surface.

8. Surface-area spring element according to one of the preceding claims, **characterized in that** its foot part (2) has a locking pin (13), with locking protuberance (14), arranged on an elastic lug (15) and, with the surface-area spring element (1) installed in a mount of an underlying surface, the locking pin (13) is retained such that it is permanently prestressed counter to its plug-in direction.

## Revendications

1. Élément de ressort de surface d'un sommier de meuble d'assise ou de couchage en plastique, comprenant une partie de base (2) destinée à être fixée sur un appui inférieur avec des bras de support (3) pivotés latéralement vers le haut dans des directions opposées et des surfaces d'appui façonnées sur ceux-ci (4 ; 5 ; 9), **caractérisé en ce que** l'élément de ressort de surface (1) présente au moins une surface d'appui centrale (5) avec deux surfaces latérales (6) opposées et s'étendant latéralement vers le bas avec des bords inférieurs (7), sur lesquels sont façonnées des ailes de support (8) qui reviennent par pivotement vers le haut et vers l'extérieur dans la direction latérale et qui se prolongent alors par des surfaces d'appui latérales (9) qui sont connectées aux surfaces d'appui (4) des bras de support (3) et **en ce qu'**une sollicitation verticale de la surface d'appui centrale (5) vers le bas produit de manière interactive une force conjuguée orientée vers le haut dans les surfaces d'appui latérales (4 ; 9) et en cas de déformation libre, les deux ailes de support (8) sont soulevées vers le haut.

2. Élément de ressort de surface selon la revendication 1, **caractérisé en ce qu'**il est fabriqué d'une seule pièce sous forme de pièce moulée par injection à un ou plusieurs composants.

3. Élément de ressort de surface selon l'une quelconque des revendications précédentes, **caractérisé en ce qu'**au moins une région partielle de la surface d'appui centrale (5) est réalisée sous forme de surface de palier permanente pour un appui et se soulève au moins dans l'état non sollicité dans la direction horizontale par le biais des surfaces d'appui latérales (4 ; 9).

4. Élément de ressort de surface selon l'une quelconque des revendications précédentes, **caractérisé en ce que** les surfaces latérales (6) de la surface d'appui centrale (5) et les ailes de support (8) sont pourvues de renforcements mutuels (10).

5. Élément de ressort de surface selon l'une quelconque des revendications précédentes, **caractérisé en ce que** la surface d'appui centrale (5) est réalisée de manière légèrement bombée vers le haut et est pourvue d'évidements de ventilation (11).

6. Élément de ressort de surface selon l'une quelconque des revendications précédentes, **caractérisé en ce qu'**il présente une, deux ou plusieurs parties de base (2) et, en vue de dessus, **en ce qu'**il présente une surface de base étroite, quadratique ou rectangulaire allongée ou une surface de base ronde ou ovale.

7. Élément de ressort de surface selon l'une quelconque des revendications précédentes, **caractérisé en ce qu'**il est disposé à raison de plusieurs éléments répartis dans une direction longitudinale et/ou transversale sur un appui inférieur tel qu'un longeron transversal quasiment rigide (12) ou une surface plane.

8. Élément de ressort de surface selon l'une quelconque des revendications précédentes, **caractérisé en ce que** sa partie de base (2) présente un tourillon de verrouillage (13) avec des cames de verrouillage (14), lequel tourillon de verrouillage est disposé sur une patte élastique (15) et le tourillon de verrouillage (13), dans l'état monté de l'élément de ressort de surface (1), est maintenu de manière précontrainte de manière durable à l'encontre de sa direction d'enfoncement dans un logement d'un appui inférieur.
